(19)

Europäisches
Patentamt
European
Patent Office
Office européen
des brevets

(11) **EP 2 566 097 A1**

(12) **EUROPEAN PATENT APPLICATION**

(43) Date of publication:
06.03.2013 Bulletin 2013/10

(51) Int Cl.:
*H04L 9/08* (2006.01)  *G05B 19/05* (2006.01)
*G05B 19/409* (2006.01)  *G06Q 10/06* (2012.01)

(21) Application number: 11180047.0

(22) Date of filing: 05.09.2011

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Research Ltd.**
**8050 Zürich (CH)**

(72) Inventors:
• **Hadeli, Hadeli**
**5400 Baden (CH)**

• **Schierholz, Ragnar**
**5436 Würenlos (CH)**
• **Obermeier, Sebastian**
**5107 Schinznach-Dorf (CH)**
• **Dzung, Dacfey**
**5430 Wettingen (CH)**
• **Hristova, Ana**
**5400 Baden (CH)**

(74) Representative: **ABB Patent Attorneys**
**C/o ABB Schweiz AG**
**Intellectual Property (CH-LI/IP)**
**Brown Boveri Strasse 6**
**5400 Baden (CH)**

(54) **Enabling a critical command of a device**

(57)    A method for enabling a critical command of a device 16 in an industrial automation and/or control system 12 comprises the steps of: retrieving at least two authentication secrets, each authentication secret being assigned to a user group 26a, 26b, 26c and being retrieved by a user 18a, 18b, 18c assigned to the user group; proving to the device 16 that the user 18a, 18b, 18c is in possession of the retrieved authentication se- cret, and enabling the execution of the critical command, if possession of a predetermined minimal number of au- thentication secrets is proven successfully.

Fig. 1

EP 2 566 097 A1

**Description**

FIELD OF THE INVENTION

The invention relates to the field of security in industrial systems. In particular, the invention relates to a method of enabling a critical command of a device in an industrial automation and/or control system. The invention also relates to a computer program, a computer readable medium and an industrial automation and/or control system.

BACKGROUND OF THE INVENTION

In order to comply with security requirements, industrial devices and systems must be secured against unauthorized use. For securing such devices and systems, a password or more advanced authentication mechanism may be used.

The usage of passwords may pose the problem of managing passwords to the operator or owner of the industrial control system. For example, a problem may arise, when the password has been forgotten. In such a case, the security control of the device may prevent access to the device (if the password is needed for device access) or the device cannot be managed anymore (if the password is required for maintenance purpose).

A fail to access the device or fail to manage the device in a control system environment may be very critical, since the device or the components connected to the device may even be damaged.

Usually, when a password is not accessible, a password reset mechanism in the device is used to reset the password of the device back to the factory default password. The current practices of providing password reset mechanisms comprise having a dedicated hardcoded password, calling the vendor's helpline with the serial number of the device, or pushing a combination of buttons on the device. However, such solutions may not be secure enough. A hardcoded password may be easily obtained by doing social engineering or by simply dissecting the passing traffic. Calling the vendor may be problematic since there is no standard way to authenticate the caller. Pushing a button does not enforce authentication and authorization at all.

DESCRIPTION OF THE INVENTION

It is an object of the invention to provide a fail safe and secure industrial system.

This object is achieved by the subject-matter of the independent claims. Further exemplary embodiments are evident from the dependent claims and the following description.

An aspect of the invention relates to a method of enabling a critical command of a device in an industrial automation and/or control system. For example, the critical command may be a password reset of the device.

According to an embodiment of the invention, the method comprises the steps of: retrieving at least two authentication secrets by at least two users, each authentication secret being assigned to a user group and being retrieved by a user assigned to the user group; proving to the device that each of the at least two users is in possession of the respective retrieved authentication secret, and enabling the execution of the critical command, if possession of a preconfigured or predefined minimal number of authentication secrets is proven successfully. The minimal number may be more than one.

In such a way, the execution of the critical command is not assigned to one user, but to a number of users, each of which belongs to a different user group. If the different user groups have more than one member, the critical command may be executed even in the case, when some of the users assigned to the user groups are not available. Furthermore, it needs at least two authentication secrets in order to enable the execution of the critical command. No single person may execute the critical command.

Further aspects of the invention relate to a computer program for enabling a critical command of a device in an industrial automation and/or control system and a computer readable medium in which such a computer program is stored.

A further aspect of the invention relates to an industrial automation and/or control system.

According to an embodiment of the invention, the system comprises a plurality of devices and an authentication and authorization server, wherein each of the plurality of devices is adapted to execute a critical command, wherein the authentication and authorization server is adapted to store authentication secrets for enabling the execution of the critical command, wherein the industrial automation and/or control system is adapted to carry out the method as described in the above and in the following..

It has to be understood that features of the method as described in the above and in the following may be features of the system as described in the above and in the following.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. schematically shows an industrial system according to an embodiment of the invention.
Fig.2 shows a flow diagram for a method for enabling the execution of a critical command according to an embodiment of the invention.
Fig.3 shows a flow diagram for a further method for enabling the execution of a critical command according to an embodiment of the invention.
Fig. 4 shows an image with an authentication secret according to an embodiment of the invention.

In principle, identical parts are provided with the same reference symbols in the figures.

DETAILED DESCRIPTION OF EXEMPLARY EMBODIMENTS

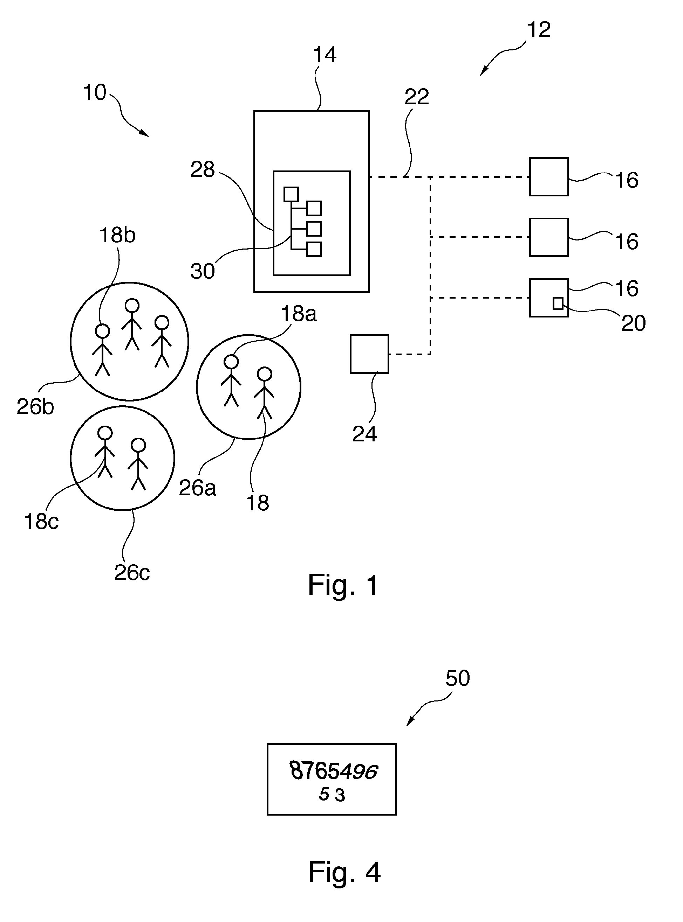

Fig.1 shows a security system 10 comprising an industrial automation and/or control system 12 with an authentication and authorization server 14 and a plurality of devices 16.
The industrial automation and/or control system 12, which for example may be an electrical substation, comprises a plurality of devices 16 providing control and/or protection/safety functionality or facilitating the network communication in the system 12, for example control and protection devices 16 for controlling and protecting equipment of an electrical substation or routers 16 and switches 16 in a substation network. A device 16 may be any device which is adapted to perform an authentication and authorisation mechanism. Each device 16 has a basic password (or more general a basic authentication secret) for authenticating a user 18 that wants to access the device 16, for example for reconfiguring the device 16 or for executing a command like opening a switch controlled by the device 16. It has to be noted that the basic authentication secret may be changed by the user 18. Furthermore, the basic authentication secret may be not a general secret that may be used by any user. The basic authentication secret may be user specific.
A device 16 may be accessed directly via an interface 20 at the site of the device 16 or remotely via a network 22, for example an intranet or the Internet. The security system 10 may comprise a remote access device 24, for example a PC, that is connected to the network 22 and over which the user 18 may access the device 16.
Each device 16 is adapted to execute a critical command (critical with respect to security and/or operational aspects), for example to reset the configuration of the device 16 to a factory setting, to reset the basic password to a factory setting and/or to modify the control parameters of a device. However, a user 18 may not be able to execute the critical command, when the user 18 is authenticated and authorized with the basic authentication secret.
The critical command may only be executed by a number of users 18a, 18b, 18c belonging to different user groups 26a, 26b, 26c as described in the above and in the following.
The authentication and authorization server 14 comprises a memory or storage system 28 in which for each user group 26a, 28b, 26c an authentication secret for the critical command for the device 16 is stored. For example, the authentication secrets are stored in a folder structure 30 and each user of a group may only gain access to one of the folders or the authentication secrets may be stored in a database system which is under access control based on the aforementioned groups.
The users 18a, 18b, 18c may be assigned to the user groups 26a, 26b, 26c with the aid of the authentication and authorization server 14, when authenticating themselves at the server 14, for example when logging in the server 14 over the network 22 with a remote access device 24.
A user 18a, 18b, 18c may retrieve the authentication secret from the server 14 and may send it to (or may input it in) the device 16. The critical command may then be executed by the device 16, when it has received a number of different authentication secrets of different user groups 26a, 26b, 26c. In such a way, the critical command may be executed, when the user 18 or his basic authentication secret is not available. Furthermore, at least more than one user 18a, 18b, 18c is necessary to execute the critical command.

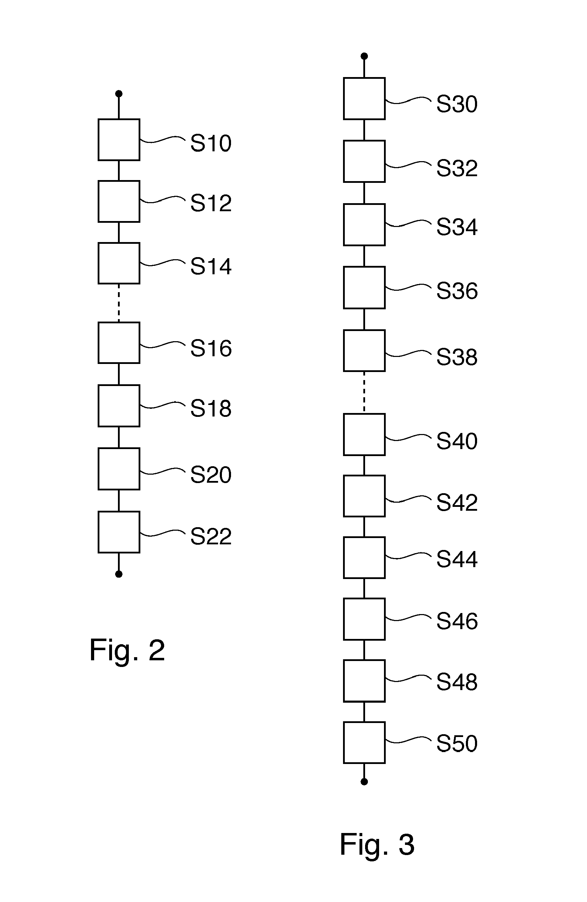

Fig. 2 shows a flow diagram for a first method for enabling the execution of a critical command.
In step S10, *m* authentication secrets are created. For example, *the m* authentication secrets are 5 different passwords. For example, the authentication secrets may be randomly created by the server 14 (for example according to a secret sharing mechanism). In general, an authentication secret may be seen as a generalization of a "password" beyond pure alphanumeric text.
In step S12, the server 14 stores the m authentication secrets in the storage system 28, for example in separate folders 30. The m authentication secrets may be stored in a storage system 28 under role-based access control (RBAC) and Authentication, Authorization and Accounting (AAA). Furthermore, the m authentication secrets may be stored in the device 16 in the form of a hash or in a similar secured way.

In step S 14 the users 18, 18a, 18b, 18c are grouped into m user groups 26a, 26b, 26c. The user 18, 18a, 18b, 18c may be employees that are assigned to have the right to execute the critical command on the device 16.

For example, the users 18, 18a, 18b, 18c may be divided into m user groups 26a, 26b, 26c by assigning a user with an employee identity number N to the user group with the number (N mod m). Each user group may only have access to one authentication secret, for example by giving the user group 26a, 26b, 26c access to only one of the folders 30.

According to an embodiment of the invention, the method comprises the step of storing at least two authentication secrets in a storage device 28 such that only a user 18a, 18b, 18c assigned to a user group 26a, 26b, 26c can access an authentication secret assigned to the user group. For example, the at least two authentication secrets are stored in the authentication and authorization server 14.

According to an embodiment of the invention, a user 18a, 18b, 18c is assigned to (exactly) one user group 26a, 26b, 26c.

According to an embodiment of the invention, only one authentication secret is divulged to one user 18a, 18b, 18c. In this case, the server 14 may only divulge one authentication secret to one user 18a, 18b, 18c, for example even if the user 18a, 18b, 18c is assigned to several user groups 26a, 26b, 26c. This may require a corresponding check for multiple assignments by the server 14.

To store the authentication secrets in the storage system 28, for example in folders 30, a role-based access control (RBAC) and authentication, authorization and accounting (AAA) may be applied. In the case, the users 18a, 18b, 18c are employees of an enterprise, access to the storage 28 may be done by using the normal enterprise credentials of the employees that are responsible for performing the password reset. Storing the authentication secrets in a well-managed enterprise storage system 28 may ensure that the authentication secrets remain in the folders 30 and are not directly attached to any particular employee. In the case of lay-off, termination or any event where the particular responsible employee(s) are not able or are not allowed to access the secret anymore, the administrator can simply disable the access to the folder 30 and assigns new employee(s) to that role accordingly. Furthermore, access to the authentication secrets may be monitored using standard security controls.

In step S16, when there is a need to execute the critical command, $n < m$ users from $n$ different groups 26a, 26b, 26c retrieve the authentication secret from the respective folder 30 from the server 14 and send the authentication secret (or a hashed value thereof) to the device 16. For example, the authentication secrets of three users ($n = 3$) may be necessary to execute the critical command.

According to an embodiment of the invention, the method comprises the step of retrieving at least two for example three, authentication secrets, each authentication secret being assigned to a user group 26a, 26b, 26c and being retrieved by a user 18a, 18b, 18c assigned to the user group.

It is possible that the system may be configured in such a way that only one authentication secret is necessary for the execution of the critical command. This would still allow the management of the user group who is authorized to perform the critical commands separately from the normal user management.

According to an embodiment of the invention, the method comprises the step of presenting (by the user 18a, 18b, 18c) the authentication secret to the device 16. This may be done locally via the interface 20 or remotely in a secured or not secured way via the remote access device 24.

In step S 18, the device 16 checks, whether the users 18a, 18b, 18c are able to prove that they possess the respective authentication secret, for example by comparing the hashed value submitted by the user 18a, 18b, 18c with a hashed value stored in the device 16. However, the device 16 may directly check that the authentications secrets match the predefined ones.

According to an embodiment of the invention, the method comprises the step of proving to the device 16 that the user 18a, 18b, 18c is in possession of the retrieved authentication secret.

According to an embodiment of the invention, the method comprises the step of verifying the authentication secret by the device 16.

According to an embodiment of the invention, the method comprises the step of verifying the authentication secret by comparing a hash of the authentication secret with a stored hash. In this case, no distinction as to user groups 26a, 26b, 26c may be necessary.

According to an embodiment of the invention, the method comprises the steps of indicating the minimal number $n$ to the device 16 and postponing the verification process until the minimum number $n$ of authentication secrets has been presented to the device 16.

According to an embodiment of the invention, proving the possession comprises a zero knowledge password proof. A zero knowledge password proof may be an interactive method for one party (the prover, i.e. the user 18a, 18b, 18c) to prove to another party (the verifier, i.e. the device 16) that it knows a value of a password, i.e. the authentication secret, without revealing anything other than the fact that it knows that password to the verifier. Standards for these methods include IETF RFC 2945, IEEE P1363.2, and ISO-IEC 11770-4.

In step S20, when enough (for example $n = 3$) authentication secrets (and in particular hashes) have been validated by the device 16, the device 16 executes the critical command.

According to an embodiment of the invention, the method comprises the step of enabling the execution of the critical command, if possession of a predetermined minimal number ($n > 1$) of authentication secrets is proven successfully.

According to an embodiment of the invention, a number m of authentication secrets is defined/generated/stored for enabling a critical command of one device 16 and the minimal number $n$ of authentication secrets to be proved is smaller than or equal to the *number m* of stored authentication secrets.

According to an embodiment of the invention, the critical command is a reset, for example to a factory setting of a basic authentication secret of the device 16 or another deblocking command.

In step S22, when the authentication secrets have been used, new authentication secrets may be automatically generated and/or the new authentication secrets may be stored in the folders 30, as described with respect to S10 and S12.

According to an embodiment of the invention, at least two authentication secrets are used in order to perform the execution of the critical command, for example a password reset mechanism. This fulfills the concept of two-man rule (a.k.a. four-eye principle or dual authorization) which basically imposes that all access and actions requires the presence of two authorized people at all times. This as well prevents a single user to exercise the password reset mechanism and use this as a threat (rogue insider or malicious employee scenario).

Fig. 3 shows a flow diagram for a second method for enabling the execution of a critical command. In principle, the second method may comprise the same method steps as the first method, only the generation of the authentication secrets and their verification may differ from the first method.

In the second method, to generate and to store the authentication secrets for executing the critical command, the following steps are performed:

In step S30, the server 14 generates a reset key $k_x$, which may be used to execute the critical command on the device 16. $x$ stands for one of the devices 16. For example, the reset key $k_x$ may be a randomly generated character string. Although called reset key, more generally the reset key $k_x$ may be a command key for executing a specific critical command on the device 16.

The reset key $k_x$ may be composed by a concatenation operation of the following two elements: a generic key k' for all devices 16 and unique identity $u_x$ of the device 16.

$$k_x = k' \oplus u_x$$

With such a reset key $k_x$ easy password management may be enabled for the devices 16 and for the systems 10. Only a single password k' may be provided for the system 10, and for every device 16, the stored (hashed) password is the concatenation of $k'$ and $u_x$.

For example, the device 16 with the number #1 may have the device identifier *"1001"* and the generic key may be *"9875136496"*. Thus, the reset key may be *"98751364961001"*.

According to an embodiment of the invention, the method comprise the step of generating a command key $k_x$ for enabling a critical command of the device 16.

In step S32, the server 14 stores a hashed value of the reset key $k_x$ in the device 16. The reset key $k_x$ may to be stored in the form of a hashed value

$$H_x = h(k_x),$$

or for a better theft resistance feature, in the form of a double hashed value

$$H_x = h\big(h(k_x)\big),$$

wherein h is a hash function.

In step S34, the reset key $k_x$ is broken into a number of m shared authentication secrets $s_x^i$ (numbered by i = 1, ..., m). Out of *the m* shared authentication secrets $s_x^i$, it needs $n \leq m$ shared authentication secrets $s_x^i$ to reconstruct back the reset key $k_x$. In cryptography, there are different ways to perform the breaking of the reset key $k_x$.

Some of them are: Shamir's scheme, Blakley's scheme, Chinese Remainder Theorem.

In general, the following steps are required for breaking the reset key $k_x$:

Define the number $m$ of shared authentication secrets $s_x^i$ to be generated.

Define the number $n$ of shared authentication secrets $s_x^i$ needed, $n$; $n \leq m$, to reconstruct the reset key $k_x$.

The number of generated shared authentication secrets $s_{x,}^i$ is generated as

$$\forall i; \; i = 1, \ldots, m; \; s_x^i = F(k_x),$$

wherein $F$ can be any secret sharing scheme function. Depending on the chosen secret sharing scheme function $F$, additional information such as parameters for $F$ may be needed.

For example, the shared authentication secrets $s_x^i$ may be generated with Shamir's scheme, in particular $m$ = 5 shared authentication secrets $s_x^i$ may be generated of the reset key $k_x$ with a minimum of $n$ = 3 shared authentication secrets $s_x^i$ to be provided in order to reconstruct the reset key $k_x$.

To generate the shared authentication secrets, according the Shamir's scheme, $n$ - $1$ random numbers have to be applied as parameters. In the case $n$ = 3, these are two random numbers.

For example, with the two random numbers 23 and 98, the 5 authentication secrets generated from the reset key *"98751364961001"* are "8765496", "6498756", "3216549", "6498761" and "6498765".

According to an embodiment of the invention, the method comprises the step of generating the authentication secrets $s_x^i$ from the command key $k_x$ with a secret sharing scheme function F. In other words, the authentication secrets $s_x^i$ may be shares of a secret command key $k_x$.

In step S36, the server 14 assign each shared authentication secret $s_x^i$ to a role $R_x^i$ in the organization. Each of the user groups 26a, 26b, 26c may define a role $R_x^i$ for the users 18a, 18b, 16c in the respective group 26a, 26b, 26c. For instance, the following roles are to be considered as the holder of those secrets, namely: operator role, engineer role, supervisor role, deputy supervisor role, and administrator role. A role may simple be a virtual role called "password reset keyguards" — on which the virtual role is assigned to the organizational role. Assigning the shared authentication secret to the role and not directly to a specific user 18a, 18b, 16c ensures that conditions such as loss of shared authentication secret and forgetting of a shared authentication secret $s_x^i$ may be prevented. Moreover, assigning shared authentication secrets $s_x^i$ to different roles $R_x^i$ ensures that nobody has the complete information on the original reset key $k_x$.

For each assigned role $R_x^i$, there may be either exactly one or more than one user 18a, 18b, 18c that have the role $R_x^i$.. However, a supervisor role may only be assigned to as much as one person per operation shift.

In step S38, the server 14 stores the shared authentication secrets in the storage system 28 in such a way that only a user 18a, 18b, 18c assigned to the role $R_x^i$ is able to access the shared authentication secret $s_x^i$ assigned to the same role.

Any of the assigned roles $R_x^i$ may have to be provided with a storage system 28 under enterprise IT environment where proper role-based access control (RBAC) and proper Authentication, Authorization and optionally Accounting (AAA) mechanism are applied. For each assigned role $R_{x,}^i$, there may exist only one location to store the shared authentication secret $s_x^i$, that is paired to the role $R_x^i$.

For example, the authentication secrets $s_x^i$ may be stored to folders 30 each of which may only be accessed by one role $R_x^i$ or they may be stored in a database system where each of them may only be accessed by one role $R_x^i$. This may ensure that the authentication secrets $s_x^i$ will not be lost due to human's mistakes. In addition, since the users 18a, 18b, 18c do not need to remember the authentication secrets $s_x^i$, this may reduce the complexity of maintaining the authentication secrets $s_x^i$.

To perform the execution of the critical command, for example a reset mechanism on the device 16, the following steps are performed:

In step S40, when there is a need to retrieve the reset key $k_x$ to perform the execution of the critical command, $n$ out of $m$ roles $R_x^i$ have to be summoned that are assigned to the shared authentication secrets $s_x^i$. For instance, if a device 16 needs to be reset, then at least an operator 18a, an engineer 18b and their supervisor 18c are summoned and/or informed that their respective authentication secrets are needed.

In step S42, users 18a, 18b, 18c who are assigned to the summoned roles access the respective folder 30 and retrieve the authentication secrets $s_x^i$, for example with the access device 24. Each of the users 18a, 18b, 18c then accesses the device 16 either remotely with the access device 24 or directly with the interface 20 of the device 16 and enters (or submits) his shared authentication secret $s_x^i$ in (to) the device 16.

Optionally, the user 18a, 18b, 18c may additionally submit the number $n$ of authentication secrets $s_x^i$ that are needed for reconstructing the reset key $k_x$. The reconstruction may then be suspended or postponed be the device until $n$ authentication secrets has been received.

In step S44, when the number $n$ of shared authentication secrets $s_x^i$ is reached, the device 16 reconstructs the reset key $k_x'$. To reconstruct the reset key $k_x'$, the inverse function $F^{-1}$ of the secret sharing scheme function F is used:

$$k_x' = F^{-1}\left(s_x^q\right); q = 1, \dots, n; n \le m; s_x^q \in \{s_x^1, \dots, s_x^m\}$$

In step S46, the device 16 calculates the reconstructed hashed value

$$H_x' = h(k_x')$$

from the reconstructed reset key $k_x'$.

In step S48, the device 16 compares the reconstructed hashed value $H_x'$ with the stored hashed value $H_x$. If both hashed values are equal, the device 16 provides access to execute the critical command or executes the critical command directly.

According to an embodiment of the invention, the method comprises the step of reconstructing (by the device 16) a command key $k_x'$ from the at least two authentication secrets $s_x^i$; and verifying the at least two authentication secrets $s_x^i$ by comparing a hash $H_x'$ of the command key $k_x'$ with a stored hash $H_x$.

In step S50, when the critical command is executed, for the sake of security best practice, the shared authentication secrets may be regenerated. For example, the device 16 may inform the server 14 that the critical command has been executed and that new authentication secrets $s_x^i$ are needed.

After that, the steps S30 to S38 may be performed, but different parameters that are used in generating the shared authentication secrets may be used. For example, in the Shamir's scheme, a set of different shared authentication secrets may be obtained by changing the values of *(n-1)* random numbers, whilst keeping $k_x$ unchanged.

As a modification of the above methods, in step S12 or in step S38, the authentication secret, for example the shared authentication secret $s_x^i$, may be stored in a form that only a human being is able to read or that is at least very difficult to decode by a computer.

In this case, for each generated shared authentication secret $s_x^i$, before it is stored into the assigned folder 30, the content of $s_x^i$ is transformed into a form where it is assessable that the reader or obtainer of the information in $s_x^i$ is a human being. A way to do this is by transforming the information (letters or digits) into a distorted image, similar to what is often used in the CAPTCHA (Completely Automated Public Turing test to tell Computers and Humans Apart) mechanism.

Note that, depending on the used secret sharing scheme, other information may be as well embedded into the image to help during the reconstruction of the reset key $k_x$. For instance, in the Shamir's scheme, the number *m* of generated shared authentication secrets $s_x^i$ and the minimum *n* of required shared authentication secrets $s_x^i$ to reconstruct the reset key may be embedded into the distorted image.

Fig. 4 shows an image 50 that may be generated out of an authentication secret $s_x^i$ and that may be stored in a folder 30 only accessible by a specific user group 26a, 26b, 26c or role $R_x^i$. For example, image 50 encodes the value "8765496" and the values "5" and "3", which are *m* and *n*, respectively.

To help in ensuring the integrity of the generated image 50 (in addition to the well-defined RBAC and AAA on folder 30), the hash value of the shared authentication secret $s_x^i$, may be stored separately.

When there is a need to execute the critical command, then at least *n* users with different participant roles will access the respective folders 30, open the respective image files 50 and retrieve the shared authentication secrets $s_x^i$.

Summarized, to better secure the authentication secrets from any cyber theft, a authentication secret may be stored in a format where it is possible to assess and ensure that the reader of the authentication secret is a human being. This is to prevent the act of stealing the authentication secret by employing any cyber mechanism, such as Trojan, malware, etc.

According to an embodiment of the invention, the method comprises the step of transforming an authentication secret into an image 50. The authentication secret may be very difficult machine decodable from the image 50.

According to an embodiment of the invention, the method comprises the step of storing the image 50 in the storage device 28 (instead of the authentication secret itself).

According to an embodiment of the invention, the method comprises the step of verifying human access by retrieving the authentication secret from the image 50 by the user 18a, 18b, 18c.

The method for enabling a critical command may be executed by the server 14 and the devices 16. The server 14 and the devices may comprise processors for executing computer program fragments or elements that carry out the method as described in the above and in the following.

According to an embodiment of the invention, a computer program for enabling a critical command of a device 16 in an industrial automation and/or control system 12, is adapted to carry out the method as described in the above and in the following, when being executed by at least one processor.

For example, on the server 14 a computer program may be carried out that is an engineering tool (e.g. ABB's PCM600 software) for configuring a device 16 in the system 12 to enable critical commands as described in the above and in the following, that is adapted to assign a plurality of users to a plurality of user groups, to assign a minimum number *n* of authentication secrets to be successfully verified by the device 16 in order to enable the critical command on the device 16, and to assign user-group specific authentication secrets to be retrieved by users assigned to the respective user-group.

The server 14 and the devices 16 may comprise computer readable mediums, for example ROMs or hard disks in which such a computer program is stored. In general, a computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1.  A method of enabling a critical command of a device (16) in an industrial automation and/or control system (12), the method comprising the steps of:

    retrieving, by each of a first and a second user (18a, 18b, 18c) assigned respectively to a first and a second user group (26a, 26b, 26c), an authentication secret of the respective user group,
    proving to the device (16) that each of the first and second user (18a, 18b, 18c) is in possession of the retrieved authentication secret of the respective user group, and
    enabling the execution of the critical command, if possession of a preconfigured minimal number of authentication secrets is proven successfully.

2.  The method of claim 1,
    wherein the critical command is a reset of an basic authentication secret of the device (16).

3.  The method of one of the preceding claims, further comprising:

    storing the at least two authentication secrets in a storage device (28) such that only a user (18a, 18b, 18c) assigned to a user group (26a, 26b, 26c) can access an authentication secret assigned to the user group.

4.  The method of one of the previous claims,
    wherein a user (18a, 18b, 18c) is assigned to a single user group (26a, 26b, 26c); or
    wherein only one authentication secret is divulged to an individual user (18a, 18b, 18c).

5.  The method of one of the preceding claims, wherein proving the possession comprises the steps of:

    presenting the authentication secret to the device (16); and
    verifying the authentication secret by the device (16).

6.  The method of claim 5, comprising the step of:

    verifying the authentication secret by comparing a hash of the authentication secret with a stored hash.

7.  The method of claim 5, comprising the steps of:

    reconstructing a command key from the at least two authentication secrets; and
    verifying the at least two authentication secrets by comparing a hash of the command key with a stored hash.

8.  The method according to one of the preceding claims, wherein proving the possession comprises a zero knowledge password proof.

9.  The method of one of the preceding claims, further comprising the steps:

    generating a command key for enabling a critical command of the device (16);
    generating the authentication secrets from the command key with a secret sharing scheme function.

10. The method of one of the preceding claims,
    wherein a number of authentication secrets is stored for enabling a critical command of one device (16);
    wherein the minimal number of authentication secrets to be proved is smaller than the number of stored authentication secrets.

11. The method of one of the preceding claims, further comprising the steps:

    transforming an authentication secret into an image (50), the authentication secret not being machine decodable from the image (50);
    storing the image (50);
    verifying human access by retrieving the authentication secret from the image (50) by the user 18a, 18b, 18c).

12. A computer program for enabling a critical command of a device (16) in an industrial automation and/or control system (12), which, when being executed by at least one processor, is adapted to carry out the steps of the method of one of claims 1 to 11.

13. A computer readable medium in which a computer program according to claim 12 is stored.

14. An industrial automation and/or control system (12), comprising:

    a plurality of devices (16);
    an authentication and authorization server (14);
    wherein each of the plurality devices (16) is adapted to execute a critical command;
    wherein the authentication and authorization server (14) is adapted to store authentication secrets for enabling the execution of the critical command;
    wherein the industrial automation and/or control system (12) is adapted to carry out the method of one of the claims 1 to 11.

Fig. 1

Fig. 4

S10

S12

S14

S16

S18

S20

S22

Fig. 2

S30

S32

S34

S36

S38

S40

S42

S44

S46

S48

S50

Fig. 3

Europäisches
Patentamt

European
Patent Office

Office européen
des brevets

**EUROPEAN SEARCH REPORT**

Application Number

EP 11 18 0047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 453 981 A (SIEMENS PLC [GB]; SIEMENS AG [DE]) 29 April 2009 (2009-04-29) * the whole document * ----- | 1-14 | INV. H04L9/08 G05B19/05 G05B19/409 G06Q10/06 |
| Y | MENEZES, VANSTONE, OORSCHOT: "Handbook of Applied Cryptography", 1997, CRC PRESS LLC, USA, XP002676809, * page 359 - page 364 * * page 405 - page 407 * * page 524 - page 527 * ----- | 1-14 | |

TECHNICAL FIELDS
SEARCHED      (IPC)

H04L
G05B
G06Q
G06F

The present search report has been drawn up for all claims

| Place of search | Date of completion of the search | Examiner |
|---|---|---|
| Berlin | 4 June 2012 | San Millán Maeso, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 18 0047

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2012

| Patent document cited in search report | Publication date | Patent family member(s) | Publication date |
|---|---|---|---|
| GB 2453981 A | 29-04-2009 | NONE | |

For more details about this annex : see Official Journal of the European Patent Office, No. 12/82